# EUROPÄISCHE PATENTANMELDUNG

(11) **EP 2 881 822 A1**
(43) Veröffentlichungstag der Anmeldung: **10.06.2015**
(21) Anmeldenummer: 13195897.7
(22) Anmeldetag: 05.12.2013
(51) Int. Cl.: G05B 23/02, G05B 19/418

(54) **Computer-implementiertes Verfahren und System zur automatischen Überwachung und Statusermittlung ganzer Prozessabschnitte in einer Process Unit**

(71) Anmelder: Bayer Technology Services GmbH, 51368 Leverkusen (DE)
(72) Erfinder: Dr. Ross, Thomas, 51063 Köln (DE)
(74) Vertreter: BIP Patents

(57) **Zusammenfassung**

Die Erfindung betrifft ein Verfahren und ein computer-implementiertes System zur automatischen computerimplementierten Überwachung und Statusermittlung ganzer Prozessabschnitte in einer Process Unit. Es wird im Rahmen einer Lernphase das neuronale Netz basierte Modell als Gutzustand berechnet bzw. trainiert und anschließend die Prozessabschnitte überwacht bzw. diagnostiziert und der Zustand der Anlagenteile angezeigt.

## Beschreibung

Die Erfindung betrifft ein Verfahren und ein computer-implementiertes System zur automatischen computer-implementierten Überwachung und Statusermittlung ganzer Prozessabschnitte in einer Process Unit.

Vor dem Hintergrund einer zunehmend heterogenen Systemlandschaft sowie des ständig steigenden Automatisierungsgrades von Anlagen gewinnen innovative Assistenzsysteme und Plant Asset Management (PAM) Lösungen für den Operator immer mehr an Bedeutung. Dabei kommt der Überwachung und Diagnose von Apparaten, Geräten und Automatisierungstechnik einer Process Units eine Schlüsselrolle zu.

Eine zentrale Zielsetzung des modernen Plant Asset Managements liegt in der Steigerung der Anlagenverfügbarkeit und der Anlagennutzung durch Zustandsüberwachung von Feldgeräten und Anlagenkomponenten (Asset Monitoring).

Auf der Geräteebene existieren in vielen Fällen bereits Asset-Statusinformationen. Beispielsweise haben sich die sog. intelligenten Feldgeräte in vielen Betrieben schon weitgehend etabliert. Ebenso werden auf der Ebene der komplexeren Maschinen und Apparate, wie etwa Pumpen oder Wärmetauschern, Condition Monitoring Systeme bereits angeboten und sind verfügbar [Mühlenkamp, S., Geipel-Kern, A.: Plant Asset Management: In der Diagnose mechanischer Assets schlummert ungenutztes Potenzial, PROCESS, (2011) Nr. 3, 36-38]. Aber auch hier ist die aufgabengerechte Verdichtung der Statusinformationen für den Anwender zwingend erforderlich. Für die Überwachung und Diagnose bereits einfacher Apparatecluster und ganzer Teilanlagen stehen zur Prozessführung bereits standardmäßig eine Vielzahl von Informationen, wie Mess- und Stellgrößen, zur Verfügung. Häufig haben die Anwender allerdings keine Möglichkeit, die Informationen in vollem Umfang zu nutzen. Um hier frühzeitig Hinweise über schleichende Verschlechterungsprozesse zu gewinnen, kommt einer automatisierten Verdichtung sowie deren Abgleich mit dem aktuellen Betriebszustand zur echtzeitfähigen Bewertung der Asset Gesundheit eine Schlüsselrolle zu [Ross, T,. Ochs, S., Frey, C.W.: Neue Software zur Überwachung "nicht intelligenter" Anlagenteile - Teil 1, Chemie Technik, (2011) Ausgabe 11, S. 18-20.]. Denn erst auf der Basis derartiger, gesicherter Erkenntnisse ist eine Prognose und schließlich eine Ableitung geeigneter Maßnahmen möglich, etwa im Sinne der vorausschauenden Wartung, aber auch der Produktions- bzw. Stillstandsplanung. Zuverlässige Asset-Statusinformationen bilden daher die Grundlage für vielfältige und unterschiedliche, für den Geschäftserfolg wesentliche Unternehmensentscheidungen.

Es bestand daher die Aufgabe, ein System und ein Verfahren zur Überwachung von prozesstechnisch zusammenhängenden Anlagenteilen (Process Units) zu entwickeln, welches sich ohne erhebliche Engineering- und Modellierungsaufwände auf Basis der bestehenden Feldinstrumentierung für die Asset Überwachung von Betrieben nutzen lässt, dem Anwender ein zuverlässiges sowie einfach und schnell zu bedienendes Überwachungswerkzeug darstellt, wobei die Asset-Statusinformationen pro Process Unit automatisch verdichtet und aggregiert in einfacher Form dargestellt ist. Es sollten Asset-Statusinformationen über die Ebene der intelligenten Feldgeräte hinaus, auch von "nicht intelligenten" Anlagenteilen und von Teilanlagen verfahrenstechnischer Betriebe bereitgestellt werden. Hierfür bestand die Aufgabe darin, eine technische Softwarelösung bereitzustellen, die ermöglicht, dass die Schwellwertsetzung und damit die Unterscheidung zwischen Gutzustand und Abweichungen davon, automatisch während des Verfahrens ermittelt werden.

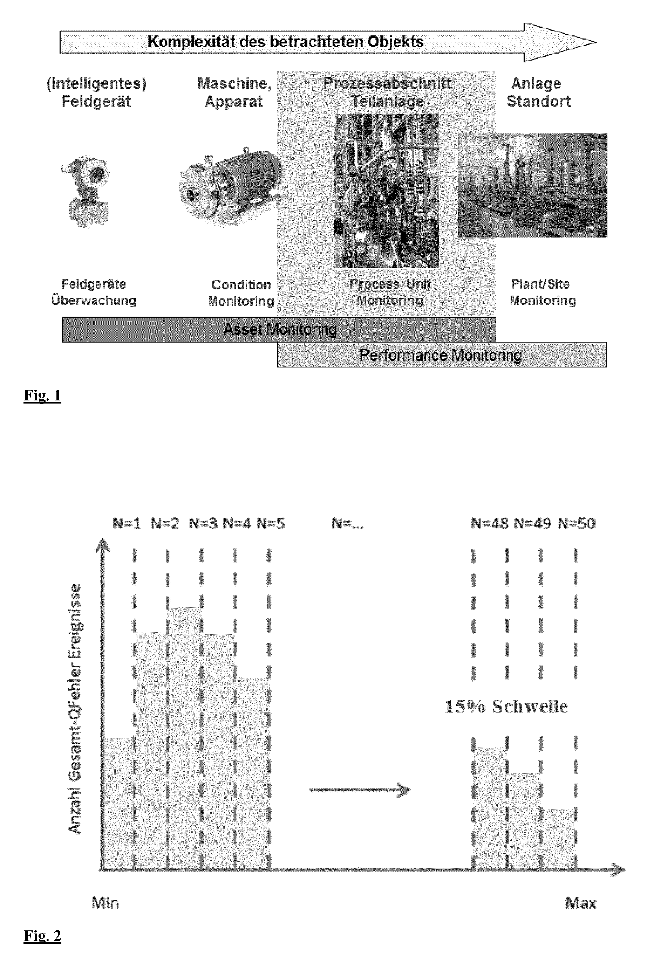

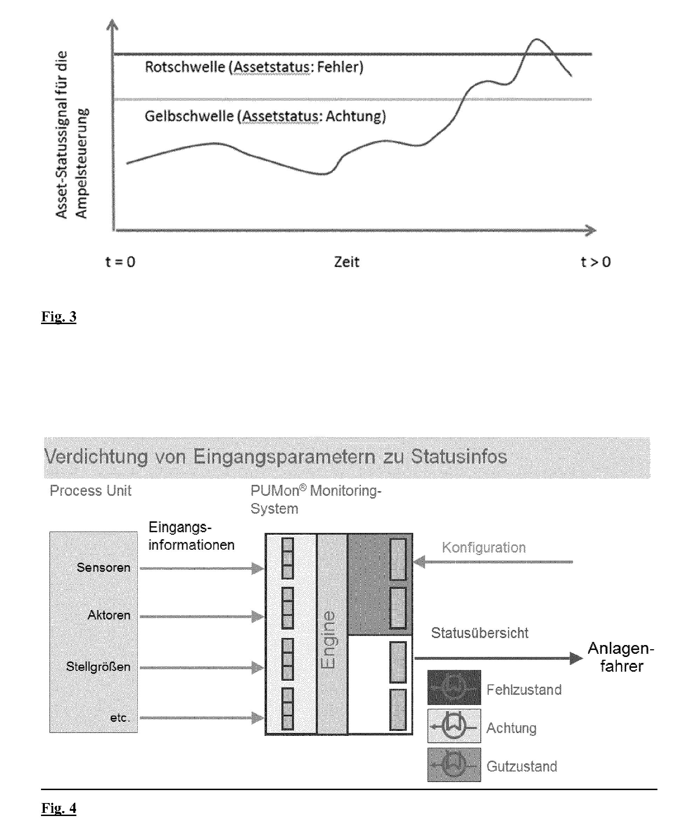

Die Überwachung von prozesstechnisch zusammenhängenden Anlagenteilen wurde durch ein computer-implementiertes Verfahren gelöst, welches eine oder mehrere Process Units umfasst:
1. Input von zu überwachenden M Prozessparametern (TagIDs), Input der Messbereichsgrenzen der M Prozessparameter zur Definition des Gutzustandes einer oder mehrerer zu überwachender Process Units in einem User Interface und Weiterleitung dieser Prozessparameterinformationen an ein Modul zur Definition der Prozess Unit, verbunden mit einem Datenbankmodul,
2. Prozessdatenimport von potenziellen Lerndatenphasen (Akquisedaten) bestehend aus Lernvektoren jeweils charakterisiert durch die Ist-, Soll-, und Stellwerten der M Prozessparameter aus Schritt 1) über ein Daten-Interface (OPC, SQL) aus einer Prozessdatenbank über ein Daten-Interface und Speicherung der importierten Prozessinformationen in das Datenbankmodul weiterhin verbunden mit einem neuronalen Netz basierten Modellmodul,
3. Selektion von Lernphasen bestehend aus N Lernvektoren aus dem Datenbankmodul aus 2) über ein User Interface alternativ automatische Selektion anhand der Definition des Gutzustandes, dann
4. automatische Übertragung der Lerndatenphasen / Lernvektoren aus Schritt 3) in das Modellmodul und vollautomatisches Trainieren eines neuronalen-Netz-basierten Modells mittels eines Algorithmus, wobei jeder Lernvektor zu einem durch den Algorithmus berechneten Neuron (Best Matching Unit) charakterisiert durch M BMU-Prozessparametern sowie dessen unmittelbare Nachbarneuronen und in einer Neuronenkarte (SOM) abgebildet wird. Das so trainierte Modell bildet den Gutzustand (Referenz) der zu überwachenden Process Unit ab.
5. Automatische Berechnung von:
   - Einem Abweichungsfehler als den Anpassungsgrad jedes Prozessparameters eines Lernvektors an den BMU-Prozessparameter des ihm zugeordneten Neurons (Best Matching Unit),
   - für jeden der N Lernvektoren einem Gesamtabweichungsfehler als die Summe der Abweichungsfehler seiner M Prozessparameter,
   - einem Residuum. Hierfür werden die Abweichungsfehler für alle M Prozessparameter eines Lernvektors berechnet, d.h. es werden anzahlmäßig MxN Abweichungen in einer Matrix berechnet.
6. Übertragung mindestens des Gesamtabweichungsfehlers pro Lernvektor aus Schritt 5) in ein Modul zur Analyse der Abweichungsfehler und automatische Ermittlung des Minimal- und Maximalwerts der berechneten N Gesamtabweichungsfehler. Der Minimal- bzw. Maximalwert der berechneten N Gesamtabweichungsfehler gibt eine zusammenfassende einfache Definition des Gutzustands anhand dessen die spätere Überwachung der Anlagen gewährleistet werden kann. Weiterhin vorteilhaft ist, dass der Gesamtabweichungsfehler berücksichtigt, dass ggf. nicht nur ein Prozessparameter allein sondern eine Kombination von Prozessparametern den tatsächlichen Gutzustand der Prozess Unit beschreiben. In einer bevorzugten Ausführungsform wird außerdem mindestens ein Schwellwert automatisch berechnet und gesetzt. In dieser besonderen Ausführungsform umfasst das Verfahren folgende weitere Schritte für die automatische Setzung des Schwellwertes:
   - der so ermittelte Wertebereich dient als Basis für ein Histogramm der Gesamtabweichungsfehler und wird in 10 bis 100, bevorzugt 15 bis 75, besonders bevorzugt 50 äquidistante (Wertebereich-) Segmente unterteilt.
   - Die Gesamtabweichungsfehler der Lernvektoren werden in die Segmente automatisch einsortiert und mindestens die Basisschwelle (vergl. Abb. 2) wird mit folgenden Schritten automatisch gesetzt: Basisschwelle = erste Segmentstützstelle, für die gilt, dass sich ≥ 5 bis 15%, bevorzugt > 15% der höchsten Gesamtabweichungsfehler innerhalb der Segmente ausgehend vom Maximalwert befinden (vergl. Abb. 2). Dabei gilt für die Basisschwelle die weitere Bedingung, dass die Basisschwelle sich im Bereich der obersten 7/10 der Segmente ausgehend vom Maximalwert, d. h. nach Schritt 6) im Bereich des 15.ten bis 50.ten Segmentes bei einer Teilung in 50 Segmente, und im Bereich des 30.ten bis 100.ten Segmentes bei einer Teilung in 100 Segmente, befinden muss. Wenn sich die Basisschwelle außerhalb dieses Bereichs befinden sollte, gilt für das automatische Nachstellen der Basisschwelle der Prozentsatz > 5% statt > 15% der höchsten Gesamtabweichungsfehler.
7. Zur Überwachung der Prozess Units erfolgt eine automatische Übertragung der online überwachten M Prozessparameter als Überwachungsvektoren der Prozess-Unit über die Zeit in das in das Datenbankmodul, gefolgt durch die Übertragung der Überwachungsvektoren in das Modellmodul,
8. in dem Modellmodul erfolgt eine automatische Zuordnung jedes Überwachungsvektors aus 7) zu dem bestpassenden Neuron (BMU) der neuronalen Karte durch Vergleich der Neuronen mit den überwachten Prozessparametern des Überwachungsvektors gefolgt durch
9. eine automatische Berechnung der Abweichungsfehler jedes Prozessparameters des Überwachungsvektors im Vergleich zu dem ihm zugeordneten bestpassenden BMU-Neurons und Berechnung des Gesamtabweichungsfehlers des Überwachungsvektors im Modul zur Analyse der Abweichungsfehler,
10. Zuordnung und Output der Gesamtabweichungsfehler jedes Überwachungsvektors im Vergleich zum Minimal- und Maximalwert der berechneten N Gesamtabweichungsfehlern aus Schritt 6). Üblicherweise werden die Überwachungsvektoren als Elemente einer Überwachungsphase über die Zeit dargestellt (Fig. 3). In einer besonderen Ausführungsform erfolgt die Zuordnung und Output im Vergleich zur berechneten Basisschwelle, besonders bevorzugt im Vergleich zu Basisschwelle multipliziert durch ein Toleranzbereich in Form eines ganzzahligen positiven Faktor von üblicherweise 2-4 erfahrungsgemäß vorzugsweise 3.

Zur Klarheit werden wesentliche Begriffe der Beschreibung folgendermaßen definiert:
Eine Process Unit ist ein prozesstechnisch zusammenhängender Prozessabschnitt, der mit der Erfindung auf Basis der bestehenden und vom Prozessexperten selektierten Sensorik/Aktorik überwacht werden kann. In der erfindungsgemäßen Lösung können mehrere Process Units zur Überwachung definiert werden.

Lerndatenphasen sind Phasen, die zum Trainieren des neuronalen-Netz-basierten Modells selektiert wurden und die in der Summe aus N Zeitstempeln und entsprechend N Vektoren der Dimension (Mx1), den Lernvektoren bestehen. Eine Überwachungsphase ist eine Phase, in der eine Prozess Unit überwacht wird und besteht in der Summe aus einer Anzahl von Überwachungsvektoren.

Die Prozessparameter werden in einer Phase zu diskreten Zeitpunkten (=Zeitstempel) abgetastet. Bei einer Abtastrate von 1/min, liegt nach der Überwachung pro Minute ein Vektor im Prozessdatenarchiv vor. Ein Vektor wird durch die aus den in Schritt 1 angelegten M Prozessparametern und einem Zeitstempel charakterisiert. Bei M Prozessparametern hat er als Spaltenvektor die Dimension (Mx1).

Abweichungsfehler, auch Quantifizierungsfehler oder QFehler genannt, beschreiben den Anpassungsgrad des Modells an die Lernvektoren bzw. den Anpassungsgrad des Überwachungsvektors an das Modell. Der Abweichungsfehler ist durch das Abstandsmaß zwischen den durch den Algorithmus berechneten BMU (Best Matching Unit) und dem präsentierten Lern- bzw. Überwachungsvektor charakterisiert. Für jeden Lernvektor bzw. Überwachungsvektor der Dimension (Mx1) werden M Abweichungsfehler berechnet.

Der Gesamtabweichungsfehler, auch Gesamtquantifizierungsfehler, Gesamt-QFehler oder Gesamtfehler genannt, entspricht der Summe aller Abweichungsfehler eines Vektors.

Das Residuum einer oder mehrerer Lerndatenphasen mit in der Summe N Zeitstempeln und Lernvektoren der Dimension (Mx1 besteht aus der Matrix aus MxN Abweichungsfehlern. Das Residuum lässt sich als Qualitätsmerkmal für das Modell verwenden.

BMU (Best Matching Unit): Wird dem neuronalen Netz ein Lern- bzw. Überwachungsvektor präsentiert, gibt es immer ein "Gewinnerneuron" (z.B. euklidischen Abstand minimal), welches am besten mit dem präsentierten Vektor übereinstimmt. Dieses heißt BMU.

Üblicherweise kann das Verfahren auf einem etwas leistungsfähigeren handelsüblichen Computer und durch eine auf diesem Computer installierte Software ausgeführt werden. Es werden keine besonderen Anforderungen an die Hardware gestellt. Die Erfindungsgemäße Lösung bedarf keine erhebliche Engineering- und Modellierungsaufwände und kann auf Basis der bestehenden Feldinstrumentierung zum Einsatz kommen.

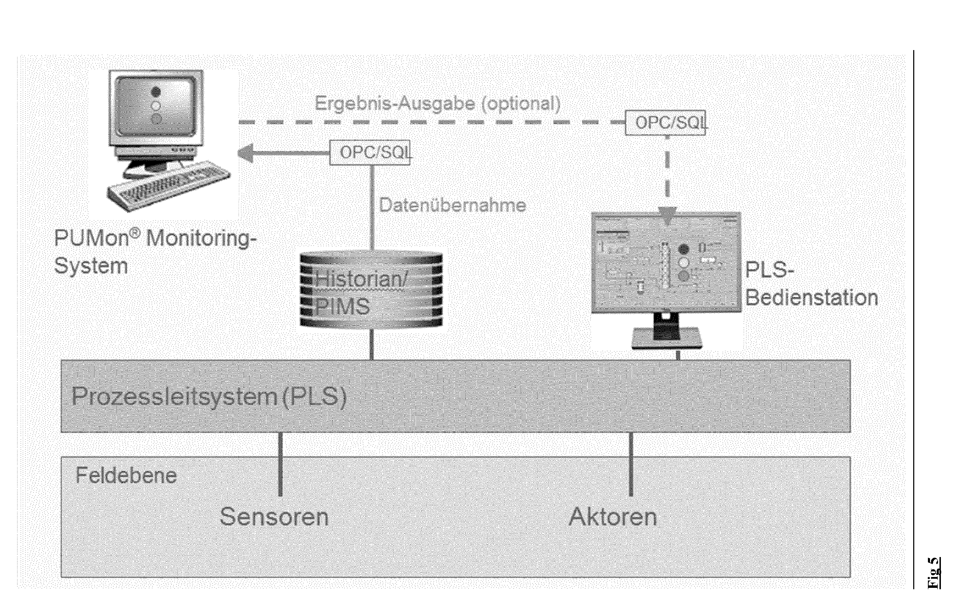

Zur Anbindung des Computers inkl. Software an die Prozessüberwachung verfügt der Process Unit Monitor üblicherweise über OPC-, ODBC- und SQL-Schnittstellen. Im Fall der OPC-Schnittstelle werden die historischen Daten aus Schritt 2) bzw. 3) über OPC-HDA und Echtzeitdaten aus Schritt 5) über OPC-DA aus der Datenbank des Prozess-Leitsystems akquiriert. (Fig. 5)

Üblicherweise werden nach außen die Statusinformationen zusätzlich pro Process Unit mittels des internen OPC-DA Servers zu Verfügung gestellt.

Im Schritt 1) sind als übliche zu überwachende zusammengehörige Anlagenteile bzw. Teilanlagen (Process Units) besonders kritische oder für den Prozess besonders bedeutende Anlagenteile definiert. Diese Anlagenteile oder Prozessabschnitte sind durch ihre zu überwachenden Prozessparameter charakterisiert. Beispiele für Anlageteile sind Destillationskolonne, Wärmetauscher-Pumpe Kombination, Trockner, Schneckenextruder oder Kessel samt angeschlossener Peripherie - wie Rohrleitungen und Instrumentierung. Hier legt der Prozessexperte die zur Überwachung notwendige Sensorik/Aktorik und die zugehörigen Messbereiche fest. Er bestimmt, welche Drücke, Temperaturen, Durchflüsse, etc. in die Überwachung einbezogen werden und welche nicht. Relevant sind üblicherweise alle Ist-, Soll- und Stellwerte der betrachteten funktionalen Überwachungseinheit. Die Software unterstützt die Konfiguration, indem Prozessvariable einfach an und abgewählt werden können. In einer besonderen Ausführungsform werden zusätzlich bestimmte Prozessparameter als "obligatorisch" und / oder als "Schlüsselvariable" deklariert. Obligatorische Prozessparameter sind Prozessparameter, die für die Überwachung notwendig sind. Fällt ein obligatorischer Prozessparameter aus, wird üblicherweise die Überwachung automatisch deaktiviert und der Prozess Unit Status "Ampel" wechselt von "rot", "gelb" oder "grün" nach "grau". Diese Änderung informiert den Nutzer über den Ausfall einer Sensorik/Aktorik in der Prozess Unit.

Schlüsselvariable sind Prozessparameter, die den zuvor definierten Wertebereich nicht verlassen dürfen. Dazu wird vorzugsweise der Minimal und / oder der Maximal Wert einer jeden Lerndatenphase um einen einstellbar hohen Prozentsatz nach unten und oben als Toleranzbereich erweitert. Verlässt der Überwachungsvektor die so erweiterten Wertebereiche, wird die Überwachung der Prozess Unit samt Status Ampel ebenfalls deaktiviert und "grau". Im Fall einer Lastvariable (Feed) kann so verhindert werden, dass die Überwachung auf untrainierte Prozesszustände angewendet wird. Es gilt: Schlüsselvariable sind automatisch auch obligatorische Parameter. Umgekehrt ist das nicht der Fall.

In Schritt 2) importiert der Anwender potenzielle Lerndatenphasen-Kandidaten (Aquisedaten). Diese werden zur nachfolgenden Begutachtung automatisch in der internen Datenbank (=Datenbankmodul) gespeichert.

Im Schritt 3) selektiert der Prozessexperte Lern- bzw. Referenzdatensätze (Lerndatenphasen), in denen die Anlage den Anforderungen entsprechend gefahren wurde. Bevorzugt werden Lern- bzw. Referenzdatensätze für mehrere Produkte bzw. Lastzustände in das Modell eingegeben. Dazu wird in Schritt 1) ein Last- bzw. Produktparameter einbezogen, der die verschiedenen Anlagenzustände (Produkt und / oder Lastzustände) markiert. Dieser wird üblicherweise als zusätzlicher "Prozessparameter" mittrainiert. Mit anderen Worten können als Prozessparameter nicht nur Daten über die Sensorik/Aktorik sondern bevorzugt auch Daten über Produkt und / oder Lastzustände benutzt werden. Dadurch reduzieren sich die Aufwände für die Modellerstellung und Überwachung.

Alternativ zum Import durch den Anwender und Selektion über das User Interface kann der Prozessexperte eine ausführliche Definition des Gutzustands im Schritt 1) durchführen, die dann einen automatischen Import (Schritt 2) und / oder Selektion (Schritt 3) von Lerndatenphasen ermöglicht.

Im Schritt 4) wird das neuronale Netz basierte Modell des Gutzustands berechnet. Das Training des neuronalen-Netz-basierten Modells erfolgt üblicherweise nach den Lernregeln wie vom Autor dargestellt [Frey, C. W.: Prozessdiagnose und Monitoring feldbusbasierter Automatisierungsanlagen mittels selbstorganisierender Karten und Watershed-Transformation, at-Automatisierungstechnik 56 (2008) Nr. 7, S. 374-380] dessen Inhalt per Referenz hier eingeführt wird. Der zu Grunde liegende Algorithmus basiert auf sog. selbstorganisierenden Karten und die datengetriebene Modellerstellung nutzt Prozessinformationen (aus der angeschlossenen Aktorik I Sensorik), wie z.B. Temperaturen, Durchflüsse, Drücke, Motorströme, etc, aus der Umgebung der Peripherie der Assets innerhalb des zu überwachenden Anlagenteils bzw. der zu überwachenden Teilanlage. Der mathematische Kernalgorithmus für das Überwachen von Anlagenteilen wurde zuvor bereits erfolgreich im Rahmen eines Diagnosekonzepts für feldbusbasierte Automatisierungsanlagen eingesetzt [Ross, T., Hedler, C. , S., Frey, C.W: Neue Softwarewerkzeug zur Überwachung "nicht intelligenter" Anlagenteile und Teilanlagen In: AUTOMATION 2012 13. Branchen- treff der Mess-und Automatisierungstechnik. VDI-Berichte 2171. Baden-Baden, 2012, S. 231 - 235, ISBN 978-3-18-092171-6].

Dank der besonderen Eigenschaften des verwendeten neuronalen Netzes konnte das Werkzeug derart konzipiert werden, dass sich der Anwender die Überwachungsmodelle eigenhändig-sozusagen per Knopfdruck - innerhalb einer Minute erzeugen kann und sie im Anschluss sofort für die Überwachung verwenden kann. Dazu wählt sich der Prozessexperte die notwendigen Prozessinformationen in Form von sog. Lern- oder auch Referenzdatensätzen aus. Dieser datengetriebene Ansatz unterscheidet sich grundlegend von der Vorgehensweise bei analytisch modellbasierten Methoden. Diese erfordern eine aufwändige Modellierung und viel Erfahrung vonseiten der Entwickler. Ändert sich der Prozess, z. B. weil bauliche oder prozessoptimierende Maßnahmen durchgeführt wurden, muss auch das analytische Modell entsprechend angepasst werden. Zusätzliche Modellierungsaufwände sind die Folge. Dagegen bedarf es bei dem hier vorgestellten datengetriebenen Ansatz lediglich einer neuerlichen Anpassung des Modells durch den Anwender.

Das neuronale-Netz-basierte Modell ist durch Training anpassungsfähig bei Änderung des Inputs.

Das trainierte Modell bildet den Gutzustand (Referenz) des zu überwachenden Prozessabschnittes ab. Abweichungen zum Modell werden flexibel und in einer bevorzugten Ausführungsform der Erfindung automatisch in Schwellwerten, mindestens in einer Basisschwelle besonders bevorzugt multipliziert durch den Toleranzbereich in Form eines ganzzahligen positiven Faktor von üblicherweise 2-4 erfahrungsgemäß vorzugsweise 3 übersetzt.

Bei der Berechnung der Basisschwelle wird die Anzahl der Segmente auf Basis von Erfahrungswerten gesetzt und beträgt üblicherweise von 10 bis 100, bevorzugt 15 bis 75, besonders bevorzugt 50. Die Auflösung des Wertebereiches muss hoch genug sein um die Schwelle präzise setzen zu können. Dies ist bei mindestens 50 Segmenten gegeben. Bei der Definition der Anzahl der Segmente soll der Nutzer aber achtgeben, dass die Auflösung nicht zu hoch wird- also dem Problem angepasst bleibt. Sonst kann es zu zahlreichen unbesetzten Segmenten kommen, was zu unnötig hohem Rechenaufwand führt. Bei der Einsortierung der Lernvektoren anhand deren Gesamtabweichungsfehler in die Segmente kann in seltenen Fällen vorkommen, dass sich mehr als 85% der Ereignisse im 1.ten bis zum 15.ten Segment befinden und der Rest auf die Segmente 16-50 verteilt. In diesem Fall würde der %-Satz von ≥15 % der Lerndatenvektoren mit dem Gesamtabweichungsfehler > Basisschwelle zu tief gesetzt. Daher wird %-Satz der Lerndatenvektoren mit dem Gesamtabweichungsfehler ≥ Basisschwelle üblicherweise nach ≥5% der Ereignisse mit den höchsten Werten gesetzt. Besonders bevorzugt wird die berechnete Basisschwelle durch ein Toleranzbereich in Form eines ganzzahligen positiven Faktor von üblicherweise 2-4 erfahrungsgemäß vorzugsweise 3 multipliziert.

Optional können auch die Abweichungsfehler in das Modul zur Analyse der Abweichungsfehler übertragen werden und eine Basisschwelle für jeden Prozessparameter ermittelt werden. Ein weiteres Output des Verfahrens ist dann eine Zuordnung des betrachteten Parameters jedes Überwachungsvektors im Vergleich zu einer vorparametrierten Schwelle (Basisschwelle mal der positiver ganzzahliger Faktor) des betrachteten Parameters.

Wird das System für die Überwachung einer Prozess Unit über längere Zeit eingesetzt, wächst die Anzahl von anwendbaren Lerndatensätzen. Es ist ggf. vorteilhaft, die Schritte 4 bis 6 zu wiederholen, um neue Lernsätze im Modell des Gutzustands zu berücksichtigen. Die Modellaktualisierung sollte idealerweise als Teil einer gelebten PAM-Strategie in den betrieblichen Alltag integriert werden. Die Aufwände sind Dank der einfachen Bedienung und der geringen Anzahl an Arbeitsschritten überschaubar. Und auch für die Aktualisierung eines Modells braucht es in der Regel nur wenige Minuten.

Für eine bessere Bedienbarkeit wird der Output bevorzugt in Form eines Ampelsystems wie auf Fig. 3 dargestellt. Für die Rotschwelle wird üblicherweise die ermittelte Basisschwelle standardmäßig mit dem zusätzlichen positiver ganzzahliger Faktor als Einstellparameter (Wert = 3) multipliziert und die Gelbschwelle standardmäßig aber einstellbar auf 75% der Höhe der Rotschwelle gesetzt. Der Einstellparameter steuert die Empfindlichkeit der Fehlererkennung (also ob bereits kleine oder erst große Abweichungen vom trainierten Modell zu einer roten Ampel führen) im Zuge der anschließenden Überwachung des Anlagenteils bzw. der Teilanlage und kann optional geändert werden. Ebenso ist die Gelbschwelle als prozentualer Anteil der Rotschwelle optional änderbar.

Gemäß dem Ampelschema (grün= OK, gelb= Achtung, rot = Fehler) werden die Gelb- und eine Rotschwelle gesetzt, die es im Fall der Überwachung (Echtzeit) bzw. der Analyse (Offline) erlaubt, den Anwender über den Gesundheitszustand (Assetstatus) des Anlagenteils bzw. der Teilanlage zu informieren (vergl. Abb. 1).

Die Platzierung der Ampeln zur Visualisierung des Process Unit Status ausgehend aus der berechneten Basisschwelle kann vorzugsweise vom Nutzer über den User Interface angepasst werden. Auf Bedienbildern wird typischerweise für jede Process Unit eine Ampel (OK, Erhöhte Aufmerksamkeit, Fehler) auf dem zugehörigen Bedienbild visualisiert. Später können mögliche Abweichungen auf diese Weise in Echtzeit von den Anlagenfahrern registriert werden. Bei "Gelb" oder "Rot" ist der Prozessexperte zwecks Detailanalyse zu informieren.

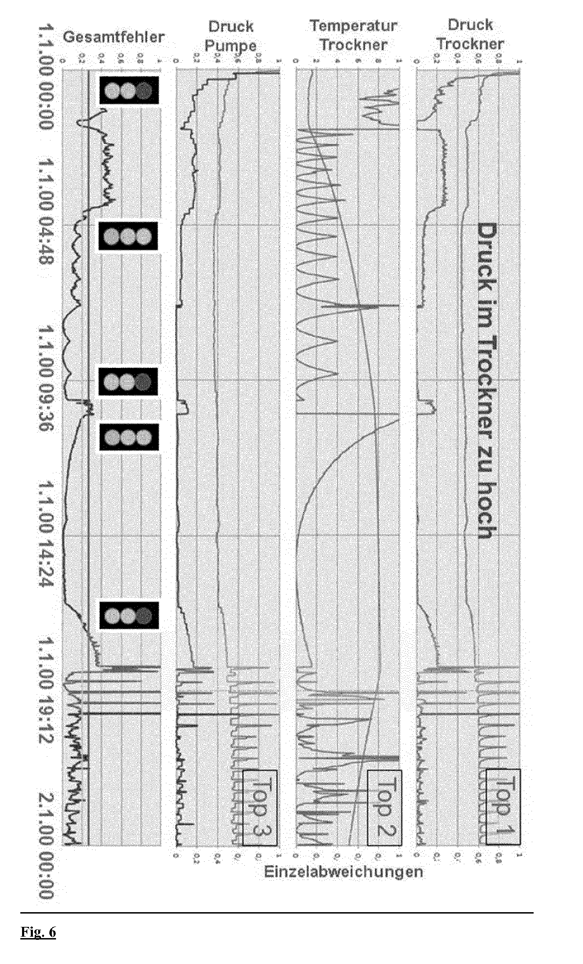

Zur besseren Übersicht der abweichenden Prozessparameter können die Prozessparameterabweichungen von einem üblicherweise von mehreren Überwachungsvektoren, absteigend nach Größe (z. B. in Form eines Top 10) graphisch zugeordnet dargestellt werden (Fig 6).

Zusätzlich kann für jeden Prozessparameter sein prozentualer Anteil am Gesamtabweichungsfehler berechnet und graphisch dargestellt werden.

Weiterer Gegenstand der Erfindung ist ein Computersystem zur Überwachung von prozesstechnisch zusammenhängenden Anlagenteilen umfassen einer oder mehreren Prozess Units umfassend folgende Module:
a) Ein User Interface zum Input i) von zu überwachenden M Prozessparameter und ii) Input der Messbereichsgrenzen der M Prozessparameter zur Definition des Gutzustandes einer oder mehreren zu überwachenden Process Units
b) Ein Modul zur Definition der Prozess Unit zur Speicherung des Inputs i) und ii), verbunden mit dem User Interface,
c) ein Datenbankmodul zum Import von Prozessinformationen von Lerndatenphasen aus einer Prozessdatenbank über ein Daten-Interface und zur Speicherung der importierten Prozessinformationen, wobei das Datenbankmodul mit dem Modul zur Definition der Prozess Unit und bevorzugt mit dem User Interface für die Selektion von Lerndatenphasen und / oder Lernvektoren verbunden ist,
d) ein neuronales Netz basiertes Modellmodul zum vollautomatischen Trainieren eines neuronalen-Netz-basierten Modells mittels einem Algorithmus und automatische Berechnung von:
   - Einem Abweichungsfehler als den Anpassungsgrad jedes Prozessparameters eines Lernvektors an den BMU-Prozessparameter des ihm zugeordneten Neurons,
   - für jeden der N Lernvektoren einem Gesamtabweichungsfehler als die Summe der Abweichungsfehler seiner M Prozessparameter,
   - optional einem Residuum für die Lerndatenphasen (d.h. für die Zusammenfassung aller selektierten Lemdatenphasen),
      wobei das Modellmodul mit dem Datenbankmodul verbunden ist,
e) ein Modul zur Analyse der Abweichungsfehler durch automatische Ermittlung des Bereichs der berechneten Gesamtabweichungsfehler, Einsortierung der von Lern- und Überwachungsvektoren anhand deren Gesamtabweichungsfehler in dem Bereich der berechneten Gesamtabweichungsfehler, bevorzugt in Bereichssegmenten und automatische Setzung mindestens einer Basisschwelle, wobei das Modul zur Analyse der Abweichungsfehler mit dem Modellmodul verbunden ist,
f) Output Interface verbunden mit dem Modul zur Analyse der Abweichungsfehler zur Darstellung der Gesamtabweichungsfehler jedes Überwachungsvektors, vorzugsweise im Vergleich zur Basisschwelle, besonders bevorzugt mal den Toleranzbereich.

Das erfindungsgemäße Systems ist besonders vorteilhaft für alle nicht standardmäßig mit einer Eigendiagnose ausgerüsteten Anlagenkomponente, wie etwa Kesseln und Rohrleitungen, Wärmetauschern oder Destillationskolonnen [Hotop, R., Ochs, S., Ross, T.: Überwachung von Anlagenteilen, atp edition, 06/2010]. Der Grundintention des erfindungsgemäßen Systems folgend, werden die Prozessparameter einer Process Unit nicht für sich allein, isoliert, betrachtet. Vielmehr korreliert das System alle Parametersätze miteinander und erfasst auf diese Weise das charakteristische Zusammenspiel der einzelnen Komponenten der zu überwachenden funktionalen Einheit. Es erlernt und überprüft dabei deren Abhängigkeiten und leitet daraus summarische Statusaussagen ab, etwa im Sinne eines Ampelschemas, bei dem zwischen Gutzustand ("grün"), sich abzeichnendem Handlungsbedarf ("gelb") und Fehlfunktion ("rot") unterschieden wird.

Zudem hat sich gezeigt, dass der Process Unit Monitor auch gewinnbringend zur Überwachung von störungsanfälligen Assetkombinationen eingesetzt werden kann, für die prinzipiell auch bereits Einzelüberwachungslösungen auf dem Markt existieren. Zum einen um bestimmte Typen von Anlagenproblemen abzudecken, die bisher nicht erfasst wurden oder auch zum anderen, um kausale Wirkzusammenhänge in den Verschlechterungsprozessen aufzudecken, beispielsweise wenn sich Anlagenprobleme innerhalb einer Teilanlage von Asset zu Asset fortpflanzen.

Auf der anderen Seite verdeutlicht Bild 1, dass Process Unit Monitoring richtig verstanden bereits einige Elemente klassischer Prozessführung (Performance Monitoring) enthält. Allerdings nicht im Sinne einer Prozessführung nach Key Performance Indikatoren, um einen optimaleren Fahrzustand zu finden. Sondern eher im Sinne einer gezielten Überwachung von bestimmten Teilprozessen, um Informationen über nachlassende Asset Performance abzuleiten, die nicht unmittelbar auf eine Beeinträchtigung der Assetgesundheit zurückzuführen ist. Etwa durch Verlassen der optimalen Fahrweise der Anlage.
- Fig 1: zeigt eine schematische Darstellung des Plant Asset Management (PAM), wobei Process Unit Monitoring mit Condition und Performance Monitoring kombiniert wird.
- Fig. 2: zeigt ein Histogramm der Gesamtabweichungsfehler als Ereignishäufigkeit pro Wertebereichssegment.
- Fig. 3: zeigt Schwellwerte zur Überwachung und Analyse des Asset Status.
- Fig. 4: zeigt eine schematische Darstellung der Architektur des erfindungsgemäßen Systems mit Schnittstellen.
- Fig 5: zeigt eine schematische Darstellung der Systemintegration in die Anlagelandschaft.
- Fig. 6: zeigt eine graphische Darstellung von nach Größe zugeordneten Parameterabweichungen (Top-10 Darstellung, wobei zur Übersicht lediglich die ersten 3 Parameter angezeigt werden).

## Patentansprüche

1. Computer-implementiertes Verfahren zur Überwachung von prozesstechnisch zusammenhängenden Anlagenteilen umfassen eine oder mehrere Prozess Units mit folgenden Schritten:
a) Input von zu überwachenden M Prozessparameter, Input der Messbereichsgrenzen der M Prozessparameter zur Definition des Gutzustandes einer oder mehreren zu überwachenden Process Units in einem User Interface, und Weiterleitung dieser Prozessparameterinformationen an ein Modul zur Definition der Prozess Unit weiterhin verbunden mit einem Datenbankmodul,
b) Prozessdatenimport von Lerndatenphasen bestehend aus Lernvektoren jeweils charakterisiert durch die Ist-, Soll-, und Stellwerte der M Prozessparameter aus Schritt a) aus einer Prozessdatenbank über ein Daten-Interface und Speicherung der importierten Prozessinformationen in ein Datenbankmodul verbunden mit einem neuronalen Netz basierten Modellmodul,
c) Selektion von N Lernvektoren aus dem Datenbankmodul aus b) über ein User Interface alternativ automatische Selektion anhand der Definition des Gutzustandes aus Schritt a), dann
d) automatische Übertragung der Lerndatenphasen / Lernvektoren aus Schritt c) in das Modellmodul und vollautomatisches Trainieren eines neuronalen-Netz-basierten Modells mittels einem Algorithmus, wobei jeder Lernvektor zu einem durch den Algorithmus berechneten Neuron charakterisiert durch M BMU-Prozessparameter sowie dessen unmittelbarer Nachbarneuronen zugeordnet werden und in einer Neuronenkarte abgebildet werden,
e) automatische Berechnung von:
• Einem Abweichungsfehler als den Anpassungsgrad jedes Prozessparameters eines Lernvektors an den BMU-Prozessparameter des ihm zugeordneten Neurons,
• für jeden der N Lernvektoren einem Gesamtabweichungsfehler als die Summe der Abweichungsfehler seiner M Prozessparameter,
• optional einem Residuum,
f) Übertragung mindestens der Gesamtabweichungsfehler pro Lernvektor aus Schritt e) in einem Modul zur Analyse der Abweichungsfehler und automatische Ermittlung des Minimal- und Maximalwerts der berechneten N Gesamtabweichungsfehler,
g) Zur Überwachung der Prozess Units erfolgt eine automatische Übertragung der online überwachten M Prozessparameter als Überwachungsvektoren der Prozess-Unit über die Zeit in das Datenbankmodul, gefolgt durch die Übertragung der Überwachungsvektoren in das Modellmodul,
h) automatische Zuordnung jedes Überwachungsvektors aus g) zu dem bestpassenden Neuron der neuronalen Karte durch Vergleich der Prozessparameter der Neuronen mit den überwachten Prozessparametern des Überwachungsvektors und Berechnung der Gesamtabweichungsfehler des Überwachungsvektors,
i) Zuordnung und Output der Gesamtabweichungsfehler jedes Überwachungsvektors im Vergleich zum Minimal- und Maximalwert der berechneten N Gesamtabweichungsfehler aus f).

2. Computer-implementiertes Verfahren gemäß Anspruch 1, wobei der im Schritt f) ermittelte Wertebereich in von 10 bis 100, bevorzugt 15 bis 75, besonders bevorzugt in 50 äquidistante Segmente unterteilt wird, die Lernvektoren anhand deren Gesamtabweichungsfehler in die Segmente einsortiert werden, und mindestens eine Schwelle automatisch mit folgenden Schritten gesetzt wird, Schwelle = erste Segmentstützstelle, für die gilt, dass sich ≥ 5 bis 15%, bevorzugt ≥15%, der höchsten Gesamtabweichungsfehler innerhalb der Segmente ausgehend vom Maximalwert befinden und die Schwelle sich im Bereich der obersten 7/10 der Segmente ausgehend vom Maximalwert befindet.

3. Computer-implementiertes Verfahren gemäß Anspruch 2, wobei die berechnete Schwelle durch ein Toleranzbereich in Form eines ganzzahligen positiven Faktors von üblicherweise 2-4 multipliziert wird.

4. Computersystem zur Überwachung von prozesstechnisch zusammenhängenden Anlagenteilen umfassen einer oder mehreren Prozess Units umfassend folgende Module:
a) Ein User Interface zum Input i) von zu überwachenden M Prozessparametern und ii) Input der Messbereichsgrenzen der M Prozessparameter zur Definition des Gutzustandes einer oder mehreren zu überwachenden Process Units,
b) Ein Modul zur Definition der Prozess Unit zur Speicherung des Inputs i) und ii), verbunden mit dem User Interface,
c) ein Datenbankmodul zum Import der Prozessinformationen von Lerndatenphasen aus einer Prozessdatenbank über ein Daten-Interface und zur Speicherung der importierten Prozessinformationen, wobei das Datenbankmodul weiterhin mit dem Modul zur Definition der Prozess Unit und optional mit dem User Interface für die Selektion von Lernvektoren verbunden ist,
d) ein neuronal-Netz-basiertes Modellmodul zum vollautomatischen Trainieren eines neuronalen-Netz-basierten Modells mittels eines Algorithmus und automatische Berechnung von:
• Einem Abweichungsfehler als den Anpassungsgrad jedes Prozessparameters eines Lernvektors an den BMU-Prozessparameter des ihm zugeordneten Neurons,
• für jeden der N Lernvektoren einem Gesamtabweichungsfehler als die Summe der Abweichungsfehler seiner M Prozessparameter,
• optional einem Residuum für jede Lemdatenphase,
e) ein Modul zur Analyse der Abweichungsfehler durch automatische Ermittlung eines Bereichs der berechneten Gesamtabweichungsfehler, Einsortierung der Lern- und Überwachungsvektoren anhand deren Gesamtabweichungsfehler in dem Bereich, wobei das Modul zur Analyse der Abweichungsfehler mit dem Modellmodul verbunden ist,
f) Output Interface verbunden mit dem Modul zur Analyse der Abweichungsfehler zur Darstellung der Gesamtabweichungsfehler jedes Überwachungsvektors im Vergleich zur Basisschwelle.

5. Computersystem nach Anspruch 4, wobei Modul zur Berechnung der Abweichung, den ermittelten Bereich in Segmente teilen kann, die Lern- und Überwachungsvektoren in den Bereichssegmenten einsortieren kann und eine Schwelle automatisch auf Basis der Verteilung der Lernvektoren in den Segmenten ermitteln kann.
